# EUROPÄISCHE PATENTANMELDUNG

(11) **EP 0 726 056 A1**
(43) Veröffentlichungstag der Anmeldung: **14.08.1996**
(21) Anmeldenummer: 95116165.2
(22) Anmeldetag: 13.10.1995
(51) Int. Cl.: A47K 1/09, A46B 15/00, A46B 9/04, A47F 7/00

(54) **Vorrichtung zur Abgabe von Zahncreme**

(30) Priorität: 02.09.1995 DE 29514115 U; 09.02.1995 DE 29502079 U; 02.09.1995 DE 29514116 U
(71) Anmelder: Schwarzkopf Wassertechnik, D-94506 Schöllnach (DE)
(72) Erfinder: Schwarzkopf, Josef, D-94506 Schöllnach (DE)
(74) Vertreter: Graf, Helmut, Dipl.-Ing.

(57) **Zusammenfassung**

Bei einer Vorrichtung zur Abgabe eines Zahnpflegemittels oder zur Halterung einer Zahnbürste (34) ist in einem Vorrichtungsgehäuse (11) oder an einem Sockel (28) eine elektrische Schaltung vorgesehen, die beim Betätigen einer Abgabevorrichtung für das Zahnpflegemittel und/oder bei Entnahme der Zahnbürste (34) aktiviert wird, und zwar zur Abgabe von Sprache oder Musik.

## Beschreibung

Die Erfindung bezieht sich auf eine Vorrichtung gemäß Oberbegriff Patentanspruch 1 oder 2.

Aufgabe der Erfindung ist es, eine Vorrichtung aufzuzeigen, die bei Kindern den Spaß am Zähneputzen erhöht und dadurch einen wesentlichen Beitrag zur Verbesserung der Mundhygiene und Zahnpflege liefert.

Zur Lösung dieser Aufgabe ist eine Vorrichtung erfindungsgemäß entsprechend dem kennzeichnenden Teil des Patentanspruches 1 oder 2 ausgebildet.

Die erfindungsgemäße Vorrichtung dient beispielsweise zur Verwendung von Zahncremespendern, wie sie seit einigen Jahren auf dem Markt angeboten werden und im wesentlichen aus einem zylinderförmigen Spendergehäuse aus Kunststoff bestehen, welches einen Innenraum zur Aufnahme von Zahncreme bildet und am oberen Ende eine Abgabeöffnung aufweist, über die Zahncreme beim Drücken einer inder Regel als Drucktaste ausgebildeten Handhabe abgegeben wird. In diesem Fall wird vor Verwendung der erfindungsgemäßen Vorrichtung ein solcher Zahncremespender in die Vorrichtung bzw. in die dortige Öffnung eingesetzt und zwar derart, daß die Abgabeöffnung des Zahncremespenders an einem Ende der Öffnung des Vorrichtungsgehäuses aus diesem vorsteht und das untere Ende des Gehäuses des Zahncremespenders am anderen Ende der Öffnung des Gehäuses der Vorrichtung aus dieser Öffnung vorsteht. Im Inneren der Öffnung ist eine Anlagefläche gebildet, gegen die das Betätigungselement bzw. die Drucktaste des Zahncremespenders anliegt, und zwar derart, daß dann, wenn von oben her auf die mit dem unteren Ende des Spendergehäuses auf einem Untergrund aufstehenden Vorrichtung ein Druck ausgeübt wird, über die Anlagefläche die Drucktaste betätigt und Zahncreme an der Abgabeöffnung abgegeben wird. Gleichzeitig wird hierbei über einen elektrischen Kontakt oder Sensor die elektrische Schaltung zur Abgabe von Sprache und/oder Musik aktiviert. Durch die Vorrichtung werden somit Kinder zur Entnahme von Zahncreme und dann auch zum anschließenden Zähneputzen motiviert. Ein Sockel der Vorrichtung zur Abgabe des Zahnpflegemittels ist dann beispielsweise als der Halter für die die wenigstens eine Zahnbürste ausgebildet.

Das Vorrichtungsgehäuse und/oder der Sockel und/oder ein diesen Sockel bildendes Gehäuse sind beispielsweise aus Kunststoff gefertigt sind. Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: in sehr vereinfachter Darstellung und im Schnitt eine Ausführungsform des erfindungsgemäßen Zahnpastespenders;
- Fig. 2: in schematischer Darstellung und im Blockdiagramm die Elektronik des Zahnpastespenders der Fig. 1;
- Fig. 3: in vereinfachter Darstellung und im Teilschnitt eine zweitmögliche Ausführungsform des erfindungsgemäßen Spenders;
- Fig. 4: in vereinfachter Darstellung einen Halter für eine Zahnbürste;
- Fig. 5: in schematischer Darstellung und im Blockdiagramm eine weitere Ausführung der Elektronik des Zahnpastespenders.

Der in den Figuren dargestellte Spender 1 für Zahnpaste besteht im wesentlichen aus einem beispielsweise aus Kunststoff gefertigten massiven Vorrichtungsgehäuse 1', welches in seiner äußeren Formgebung als für Kinder ansprechende Figur mit einem Kopf 2 und einem Rumpf 3 ausgebildet ist.

Im Rumpf 3 ist eine zylinderförmige Öffnung 4 vorgesehen, die sich von der Unterseite des Gehäuses 1' bzw. des Rumpfes 3 bis an einen zwischen dem Kopf 2 und dem Rumpf 3 gebildeten oberen Brustbereich der das Gehäuse 1' bildenden Figur erstreckt und sowohl an der Unterseite als auch an diesem Brustbereich offen ist. In die Öffnung 4 ist von unten her ein handelsüblicher Zahncremespender 6 einsetzbar, der in bekannter Weise aus einem zylinderförmigen Spendergehäuse 7 aus Kunststoff besteht, welches unten einen angeformten Fuß 8 aufweist und oben mit einem Abgabe- oder Spenderrohr 9 mit Abgabeöffnung 10 versehen ist und welches oben außerdem eine Drucktaste 11 besitzt, die beim Niederdrücken die Abgabe einer bestimmten Menge an Zahncreme an der Abgabeöffnung 10 bewirkt.

Die Öffnung 4 ist so ausgebildet, daß das Abgabe- oder Spenderrohr 9 mit der Abgabeöffnugn 10 im Brustbereich 5 aus der Öffnung 4 vorsteht, während die gefederte Drucktaste 11 gegen eine im Inneren der Öffnung 4 gebildete Anlagefläche 12 anliegt. Mit dem Fuß 8 steht der Zahncremespender 6 über die Unterseite des Rumpfes 3 aus der Öffnung 4 vor und das Spendergehäuse 7 ist dort von einem Stützring 13 umgeben, der in Richtung der Hochachse des Gehäuses 1' und damit in Richtung der Achse der Öffnung 4 und des Gehäuses 7 des Zahncremespenders 6 am Rumpf 3 verschiebbar vorgesehen ist. Die Unterseite des Stützringes 13 liegt in einer gemeinsamen Ebene mit der Unterseite des Fußes 8, d.h. nach dem Einsetzen des Zahncremespenders 6 kann die Vorrichtung bzw. das Gehäuse 1' mit der Unterseite des Fußes 8 auf eine Unterlage 14, beispielsweise auf eine Konsole in einem Bad abgestellt werden.

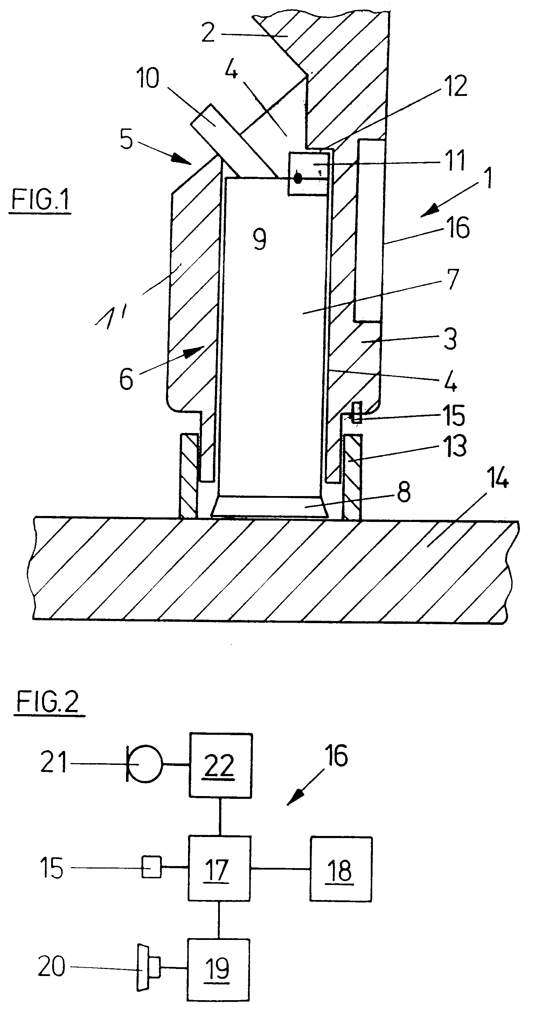

Wird von oben her auf die Oberseite des Gehäuses 1' bzw. auf den Kopf 2 gedrückt, so wird hierbei über die Anlagefläche 12 eine D ruckkraft auf die Drucktaste 11 ausgeübt, wodurch eine bestimmte Menge an Zahncreme an der Abgabeöffnung 10 abgegeben wird. Hierbei wird der Rumpf 3 relativ zu dem auf der Ablage 14 aufstehenden Stützring 13 etwas nach unten bewegt, wodurch ein im Rumpf 3 vorgesehener und mit dem Stützring 13 zusammenwirkender elektrischer Kontakt oder Taster 15 betätigt wird, der einen elektrischen Schaltkreis 16 aktiviert, der an der Rückseite des Rumpfes 3 vorgesehen und in der Fig. 2 näher dargestellt ist.

Dieser Schaltkreis weist bei der dargestellten Ausführungsform folgende Elemente mit folgenden Funktionen auf:
Steuerkreis 17 zum Steuern der Funktionen des Schaltkreises 16,
Sprachspeicher 18 zur digitalen Speicherung von Sprache und/oder Musik,
Ausgangsschaltkreis 19 mit Analog-Digital-Wandler und Audio-Verstärker zur Umwandlung digitaler Sprach- und/oder Musikinformationen des Sprachspeichers 18 in analoge Sprach- und/oder Musiksignale sowie zur Verstärkung dieser Signale,
Lautsprecher 20 zur akustischen Wiedergabe des von der Ausgangsschaltung 19 gelieferten verstärkten analogen Sprach- und/oder Musiksignals,
Mikrophon 21 zur Umwandlung akustischer Sprach- und/oder Musiksignale in elektrische Signale,
Eingangsschaltkreis 22 mit Eingangsverstärker und Analog-Digital-Wandler zur Verstärkung der Signale des Mikrophones 21 und zur Umwandlung dieser Signale in digitale im Speicher 18 speicherbare Signale.

Im einfachsten Fall ist der Schaltkreis 16 so ausgebildet, daß er beim Aktivieren des Tasters 15, d.h. immer dann, wenn ein Kind die Vorrichtung für die Entnahme von Zahncreme betätigt, aus dem Sprachspeicher 18 und gesteuert durch den Steuerkreis 17 und verstärkt in der Ausgangsschaltung 19 eine vorgegebene Musik, vorzugsweise mit einer Sprachmitteilung, beispielsweise in Form einer Belobigung für das fleißige Zähneputzen, abgegeben wird.

Da die Möglichkeit besteht, über das Mikrophon 21 und den Eingangsschaltkreis 22 Sprachinformationen im Speicher 18 zu speichern, kann die Sprachmitteilung oder Belobigung jeweils persönlich gestaltet werden, d.h. vor Inbetriebnahme der Vorrichtung können die Sprachinformationen oder Daten auf das jeweilige Kind sehr persönlich zugeschnitten eingegeben werden.

Grundsätzlich ist es aber auch möglich, daß während der Aktivierung der Vorrichtung bei der Entnahme von Zahncreme das Kind zu bestimmen Antworten aufgefordert wird, die dann im Speicher 18 gespeichert und bei der nächsten Entnahme von Zahncreme über den Lautsprecher 20 wiedergegeben werden, wodurch die Motivation für die Entnahme von Zahncreme und das Zähneputzen noch gesteigert werden können.

Die unterschiedlichsten Ausgestaltungen und Steuerungen sind für den Schaltkreis 16 denkbar.

Abweichend von der vorstehend beschriebenen Ausführungsform kann der Spender 1 auch so ausgeführt sein, daß anstelle des Stütz- und Fußringes 13 ein einen großvolumigeren Sockel bildender Ring 13' vorgesehen ist, wie dies in der Figur 1 mit unterbrochenen Linien angedeutet ist, wobei dann der gesamte Schaltkreis 16 einschließlich des Lautsprechers 20 und des Mikrophones 21 in diesem Fußring 13' untergebracht ist, und zwar zusammen mit der Stromversorgung. Ein dem elektrischen Kontakt oder Taster 15 entsprechender Taster ist dann selbstverständlich an der Oberseite des Fußringes 13' vorgesehen.

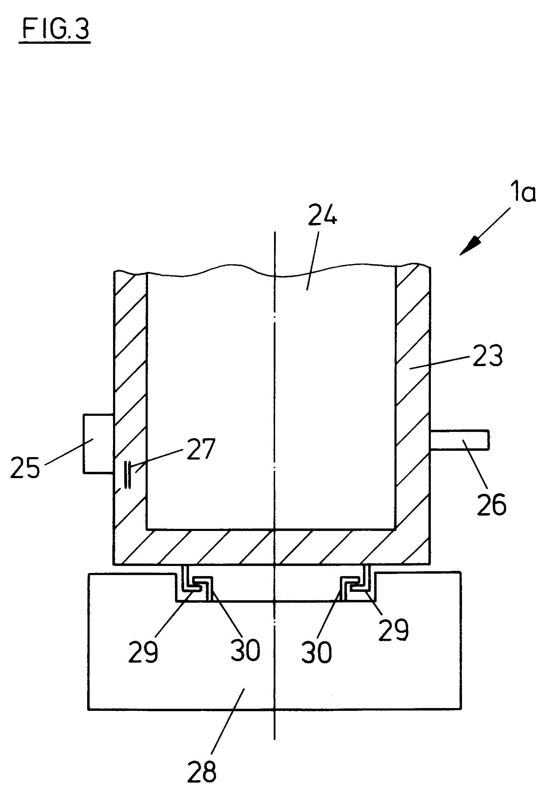

Der Spender 1 ist für die Abgabe von Zahncreme aus dem handelsüblichen Zahncremespender oder der handelsüberlichen Zahncremespendertube 6 bestimmt. Die Figur 3 zeigt einen Spender 1a, der für die Abgabe eines anderen Zahnpflegemittels bestimmt ist, beispielsweise für die Abgabe eines flüssigen Zahnpflegemittels.

Für diesen Zweck weist der Spender 1a ein Gehäuse 23 auf, welches an seiner Außenfläche wiederum in besonderer Weise als Figur usw. gestaltet ist und einen Innenraum bzw. nachfüllbaren Tank 24 zur Aufnahme des flüssigen Zahnpflegemittels bilden.

An der Außenfläche des Gehäuses 23 befindet sich eine Drucktaste 25, die zur dosierten Abgabe des Zahnpflegemittels an einem Auslaß 26 gedrückt werden kann. Der Auslaß 26 befindet sich bei der dargestellten Ausführungsform an einem der Drucktaste 25 gegenüberliegenden Bereich des Umfangs des Gehäuses 23. Die Drucktaste 25 ist beispielsweise Bestandteil einer manuellen Pumpe oder aber eines Schiebers, der beim Drücken der Drucktaste 25 eine Dosier-Öffnung zwischen dem Innenraum 24 und dem Auslaß 26 öffnet.

Unabhängig von der speziellen Ausbildung der die Drucktaste 25 aufweisenden Abgabe- und Dosiereinrichtung ist ein mit dieser Dosiereinrichtung zusammenwirkender Kontakt am Gehäuse 1a vorgesehen, der in der Figur 3 sehr allgemein mit 27 bezeichnet ist und beim Drücken der Drucktaste 25 betätigt wird. An der Unterseite des Gehäuses 23 ist abnehmbar ein Sockel 28 befestigt, der den gesamten Schaltkreis 16 enthält und an den über eine lösbare elektrische Verbindung auch der Kontakt 27 angeschlossen ist. Bevorzugt weist das Gehäuse 23 an der Unterseite Kontaktelemente 29 auf, die von entsprechenden Kontaktelementen 30 an der Oberseite des Sockels 28 bei am Gehäuse 23 befestigtem Sockel 28 hintergriffen werden. Die Kontaktelemente 29 und 30 stellen dann sowohl die elektrische als auch die mechanische Verbindung zwischen dem Gehäuse und dem Sockel 28 her.

Die Unterbringung des elektrischen Schaltkreises 16 in dem Fußring 13' oder dem Sockel 28 hat den Vorteil, daß dieser Fußring bzw. Sockel und der dortige Schaltkreis 16 in gleicher Form und Ausbildung bei ansonsten in unterschiedlichster Weise funktionsmäßig- und/oder gestalterisch ausgeführten Spendern verwendet werden kann.

Bei den beschriebenen Ausführungsformen wurde davon ausgegangen, daß der Spender 1 und auch der Spender 1a gestalterisch als Puppe ausgeführt sind. Selbstverständlich sind auch andere Gestaltungsformen des jeweiligen Gehäuses 1' bzw. 23 möglich, beispielsweise als Nachbildung von Gebäuden, Symbolen, als Ball oder dergleichen Figuren.

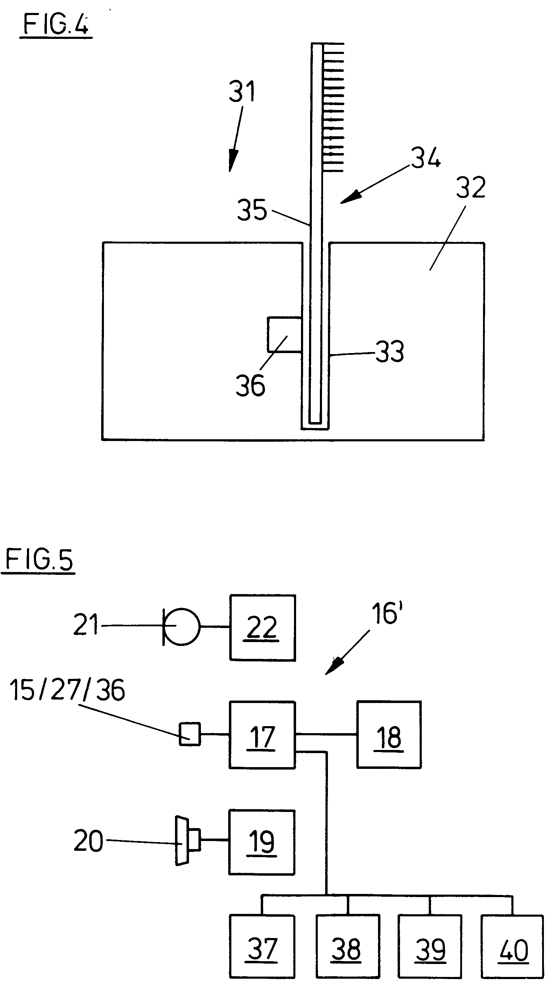

Figur 4 zeigt schließlich in sehr vereinfachter Darstellung einen Halter 31 besteht, in welchem der Schaltkreis 16 untergebracht ist und welcher wenigstens eine Aufnahme 33 bildet, in die eine Zahnbürste 34 mit ihrem Stir bzw. Schaft 35 einsetzbar ist. Bei der dargestellten Ausführungsform ist die Aufnahme 33 von einer an der Oberseite des Gehäuses 32 offenen Ausnehmung gebildet. In der Aufnahme 33 befindet sich ein Signalgeber 36, der im einfachsten Fall von einem elektrischen Taster gebildet ist und der die Aktivierung des Schaltkreises 16 zur Abgabe von Musik und/oder einer Sprachmitteilung usw. immer dann aktiviert, wenn die Zahnbürste 34 entnommen wird.

Der Halter 31 kann hierbei zugleich auch den Sockel eines Spenders für ein Zahnpflegemittel, beispielsweise den Sockel für den Spender 1a usw. bilden.

Figur 5 zeigt in vereinfachter Darstellung als weitere mögliche Ausführung einen Schaltkreis 16', der sich von dem Schaltkreis 16 dadurch unterscheidet, daß dem vorzugsweise einen Mikroprozessor aufweisenden Steuerkreis 17 ein Programmspeicher 37, eine Eingabeeinrichtung 38 und ein Taktgeber 39 sowie eine Anzeigevorrichtung 40 zugeordnet ist. Der Schaltkreis 17 bildet bei dieser Ausführungsform u.a. auch eine autonome Uhr mit Kelandarium und ermöglicht es, im voraus individuelle Sprach- oder Musikeingaben im Speicher 18 im voraus zu speichern, und zwar individuell für bestimmte Kalenderdaten, die dann an diesen Kalendertagen bei Aktivierung der Schaltung 16' ausgegeben werden.

Die Erfindung wurde voranstehend an Ausführungsbeispielen beschrieben. Es versteht sich, daß zahlreiche Abwandlungen und Änderungen möglich sind, ohne daß dadurch der der Erfindung zugrundeliegende Erfindungsgedanke verlassen wird.

### Bezugszeichenliste

- 1, 1a: Spender
- 1': Gehäuse
- 2: Kopf
- 3: Rumpf
- 4: Öffnung
- 5: Brustbereich
- 6: Zahncremespender
- 7: Gehäuse
- 8: Fuß
- 9: Spenderrohr
- 10: Abgabeöffnung
- 11: Drucktaste
- 12: Anlagefläche
- 13, 13': Stütz- oder Fußring
- 14: Ablage
- 15: elektrischer Kontakt oder Taster
- 16, 16': Schaltkreis
- 17: Steuerkreis
- 18: digitaler Sprach- und/oder Musikspeicher
- 19: Ausgangsschaltkreis
- 20: Lautsprecher
- 21: Mikrophon
- 22: Eingangsschaltkreis
- 23: Gehäuse
- 24: Innenraum
- 25: Drucktaste
- 26: Auslaß
- 27: Kontakt
- 28: Sockel
- 29, 30: Kontakt
- 31: Halter
- 32: Gehäuse
- 33: Aufnahme
- 34: Zahnbrüste
- 35: Schaft
- 36: Signalgeber

## Patentansprüche

1. Vorrichtung zur Abgabe eines Zahnpflegemittels mit einem wenigstens einen Gehäuseinnenraum zur Unterbringung des Zahnpflegemittels bildenden Vorrichtungsgehäuse (1', 23), mit einer Abgabeöffnung an der Außenseite des Gehäuses (1', 23) zur Abgabe des Zahnpflegemittels bei Betätigen einer Abgabevorrichtung, **dadurch gekennzeichnet**, daß das Vorrichtungsgehäuse (1, 23) als Figur gestaltet ist, und daß eine elektrische Schaltung (16, 16') an der Vorrichtung vorgesehen ist, die beim Betätigen der Abgabevorrichtung oder eines Betätigungselementes zur Abgabe von Sprache und/oder Musik aktiviert wird, daß die elektrische Schaltung (16, 16') einen Speicher (18) zur individuellen Speicherung von Sprache und/oder Musik sowie wenigstens einen mit dem Speicher zusammenwirkenden Schaltkreis mit angeschlossenem Lautsprecher zur Wiedergabe der im Speicher (18) gespeicherten Sprache und/oder Musik bei Aktivierung der Schaltung aufweist.

2. Vorrichtung als Halter für wenigstens eine Zahnbürste, dadurch gekennzeichnet, daß der Halter (31) wenigstens eine Aufnahme (33) für die wenigstens eine Zahnbürste (34) aufweist, daß am Halter (31) eine elektrische Schaltung (16, 16') vorgesehen ist, die beim Betätigen der Abgabevorrichtung oder eines Betätigungselementes zur Abgabe von Sprache und/oder Musik aktiviert wird, daß die elektrische Schaltung (16, 16') einen Speicher (18) zur individuellen Speicherung von Sprache und/oder Musik sowie wenigstens einen mit dem Speicher zusammenwirkenden Schaltkreis mit angeschlossenem Lautsprecher zur Wiedergabe der im Speicher (18) gespeicherten Sprache und/oder Musik bei Aktivierung der Schaltung aufweist, und daß an der Aufnahme (33) ein Sensor (36) vorgesehen ist, der beim Einführen und/oder Entnehmen einer Zahnbrüste (34) in die Aufnahme bzw. aus der Aufnahme die elektrische Schaltung (16, 16') aktiviert.

3. Vorrichtung nach Anspruch 2, dadurch gekennzeichnet, daß der Halter (31) als Sockel für die Vorrichtung zur Abgabe eines Zahnpflegemittels ausgebildet ist, wobei vorzugsweise die Vorrichtung ein wenigstens einen Gehäuseinnenraum zur Unterbringung des Zahnpflegemittels bildendes Vorrichtungsgehäuse (1', 23), mit einer Abgabeöffnung an der Außenseite des Gehäuses (1', 23) zur Abgabe des Zahnpflegemittels bei Betätigen einer Abgabevorrichtung aufweist, und daß das Vorrichtungsgehäuse (1, 23) als Figur gestaltet ist.

4. Vorrichtung nach einem der Ansprüche 1 - 3, dadurch gekennzeichnet, daß der Speicher (18) zur Speicherung von Sprache und/oder Musik in digitaler Form und der wenigstens eine Schaltkreis (19) mit wenigstens einem digitalen-analog-Wandler ausgeführt ist, und/oder
daß der Schaltkreis (16, 16') ein Mikrophon (21) mit zugehörigem Eingangsschaltkreis (22) aufweist, und zwar zur Eingabe von Sprach- und/oder Musikinformationen und zur Speicherung dieser Informationenen in dem Speicher (18).

5. Vorrichtung nach einem der Ansprüche 1 - 4, dadurch gekennzeichnet, daß das Vorrichtungsgehäuse (1) mit einer Gehäuseöffnung (4) versehen ist, in die ein Zahncremespender (6) mit einem zylinderförmigen Spendergehäuse (7) derart einführbar ist, daß er mit einem oberen, eine Abgabeöffnung (10) aufweisenden Ende aus der Gehäuseöffnung (4) und mit dem unteren Ende seines zylinderförmigen Spendergehäuses (7) aus der Gehäuseöffnung (4) vorsteht und daß in der Gehäuseöffnung (4) eine Anlagefläche (12) gebildet ist, gegen die ein Betätigungselement (11) des in das Vorrichtungsgehäuse (1') eingesetzten Zahncremespenders anliegt, so daß ein auf das Vorrichtungsgehäuse (1') ausgeübter Druck zu dem Betätigen des Betätigungselementes (11) des Zahncremespenders (6) führt.

6. Vorrichtung nach einem der Ansprüche 1 - 5, dadurch gekennzeichnet daß das Vorrichtungsgehäuse (23) wenigstens einen tankartigen Innenraum (24) zur Aufnahme des Zahnpflegemittels bildet, und daß eine manuell betätigbare Dosiereinrichtung (25, 26) zur dosierten Abgabe des Zahnpflegemittels vorgesehen ist, wobei der tankartige Innenraum (24) vorzugsweise nachfüllbar ist.

7. Vorrichtung nach einem der Ansprüche 1 - 6, gekennzeichnet durch wenigstens ein Kontaktelement (15, 27), welches beim Betätigen der Abgabevorrichtung zum Aktivieren des Schaltkreises (16, 16') betätigt wird.

8. Vorrichtung nach einem der Ansprüche 1 - 7, dadurch gekennzeichnet, daß der Schaltkreis (16, 16') im Vorrichtungsgehäuse (1') oder zumindest teilweise in einem lösbar mit dem Vorrichtungsgehäuse (1', 23) verbundenen Ring oder Sockel (13', 28, 31) untergebracht ist.

9. Vorrichtung nach einem der Ansprüche 1 - 8, dadurch gekennzeichnet, daß der in die Gehäuseöffnung eingesetzte Zahncremespender (6) mit der Unterseite seines Spendergehäuses (7) zumindest zum Teil die Standfläche der Vorrichtung bildet, mit der diese auf eine Fläche, beispielsweise auf einer Ablage (14) abgestellt werden kann.

10. Vorrichtung nach einem der Ansprüche 1 - 9, dadurch gekennzeichnet, daß die den Zahncremespender (6) aufnehmende Öffnung (4) in einem Gehäuseteil oder Rumpf (3) ausgebildet ist, und daß an diesem Gehäuseteil an der Unterseite der Vorrichtung ein Stützring (13, 13') verschiebbar vorgesehen ist, der das untere, aus der Gehäuseöffnung (4) vorstehende Ende des Spendergehäuses (7) aufnimmt.

11. Vorrichtung nach einem der Ansprüche 1 - 10, dadurch gekennzeichnet, daß der Sockel als Halter (31) ausgebildet ist, der wenigstens eine Aufnahme (33) für die wenigstens eine Zahnbürste (34) aufweist, und daß an der Aufnahme (33) ein Sensor (36) vorgesehen ist, der beim Einführen und/oder Entnehmen einer Zahnbrüste (34) in die Aufnahme bzw. aus der Aufnahme die elektrische Schaltung (16, 16') aktiviert.

12. Vorrichtung nach einem der Ansprüche 1 - 12, dadurch gekennzeichnet, daß die elektrische Schaltung (16') ein Kalendarium enthält, welches eine individuelle Speicherung und Abgabe von Sprache und Musik für bestimmte Kalendertage ermöglicht.
